# EUROPEAN PATENT SPECIFICATION

(11) **EP 2 896 576 B1**
(45) Date of publication and mention of the grant of the patent: **03.05.2017**
(21) Application number: 14161318.2
(22) Date of filing: 24.03.2014
(51) Int. Cl.: B32B 7/12, B32B 15/00, B32B 15/04, B32B 27/30, B32B 27/32, B32B 27/36, B32B 27/40, B65D 77/20, B65D 51/20, B32B 27/08, B65D 53/04

(54) **Sealing cover having opening tab for containers and method for manufacturing the same**
Verschlussdeckel mit Öffnungshahn für Behälter und Herstellungsverfahren dafür
Couvercle d'étanchéité ayant un robinet d'ouverture pour contenants et son procédé de fabrication

(30) Priority: 15.01.2014 KR 20140005010
(43) Date of publication of application: 22.07.2015
(73) Proprietor: Seal and Pack Co., Ltd., Daewol-myeon Icheon-si, Gyeonggi-do 467-852 (KR)
(72) Inventor: Wei, Se-Hwang, 448-911 Gyeonggi-do (KR)
(74) Representative: Beresford, Keith Denis Lewis

(56) References cited:
- EP-A1- 2 130 781
- WO-A2-2009/029247
- WO-A2-2009/092066
- US-A1- 2004 071 934
- US-B1- 6 866 926

## Description

### BACKGROUND OF THE INVENTION

### 1. Field of the Invention

The present invention relates generally to sealing covers having opening tabs for containers and, more particularly, to a sealing cover for containers which has an increased adhesive area between an opening tab and the sealing cover so that a user can easily remove the sealing cover from a container, and a method for manufacturing the sealing cover.

### 2. Description of the Related Art

Different kinds of sealing covers are used to seal apertures of containers.

Such sealing covers for containers have several functions such as a function of protecting the contents of a container, an easy-opening function, etc. The functions of the sealing covers also continue to evolve for the sake of consumer convenience.

Recently, high-frequency induction heating is mainly used to seal the aperture of a container with a sealing cover, whereby the sealability of the sealing cover can be enhanced.

In the high-frequency induction heating method, the sealing cover is disposed in a cap of the container before the container is coupled to the contents-filled container. Subsequently, the sealing cover adheres, through high-frequency induction heating, to a portion of the container that defines an aperture thereof.

EP-A-2 130 781 discloses such a sealing cover and method of application of the sealing cover to a container

However, in the above method, because the shape and size of the sealing cover that adheres to the container to seal the aperture are the same as those of the portion of the container that defines the aperture thereof, it is inconvenient for a user to remove the sealing cover from the container.

In an effort to overcome the above problem, several improved structures have been introduced. For example, there is a structure in which a tab protrudes outwards from a peripheral edge of the sealing cover, and a structure in which a semi-circular tab is provided on an upper surface of a sealing cover.

Particularly, as examples of the sealing cover having the semi-circular tab, products of Stanpac Inc. of Canada have been widely used and are being widely used.

However, the conventional sealing cover having the semi-circular tab is configured in such a way that an upper layer and a lower layer of the sealing cover adhere to each other only in a remaining semi-circular area of the sealing cover that is other than the tab. Therefore, if the strength with which the sealing cover adheres to the container is comparatively high, when a user grasps the semi-circular tab and pulls it to remove the sealing cover form the container, only the tab and a portion around the tab may be detached from the sealing cover rather than the entirety of the sealing cover being removed from the container. Moreover, there is a disadvantage in that, because of the problem, the size of the tab is limited.

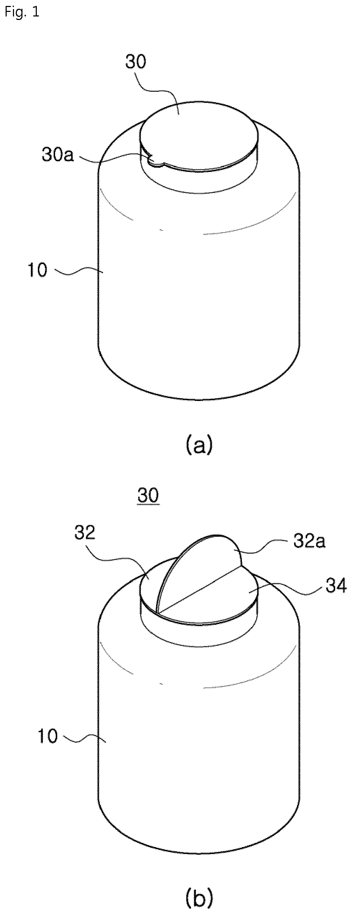

FIGS. 1A and 1B illustrate a conventional sealing cover.

FIG. 1A shows a circular sealing cover 30 which is provided with at least one small tab 30a formed on a circumferential edge thereof so that a consumer can use the tab 30a to open a container 10.

FIG. 1B shows a sealing cover 30 in which a polyester film layer 32 is formed on an upper surface of the sealing cover 30, wherein only a half of the polyester film layer 32 adheres to the sealing cover 30, and the other half thereof is used as an opening tab 32a. When a consumer grasps the semi-circular opening tab 32a and pulls it in the y-axis direction, the sealing cover 30 is removed from the container 10.

Particularly, the construction of the sealing cover (30; 32, 34) of FIG. 1B will be explained in detail below. The sealing cover 30 includes an upper layer 32 which is formed of a polyester film, and a lower layer 34 which adheres to a lower surface of the upper layer 32.

After an adhesive is applied to the lower surface of the polyester film that is the upper layer 32, a band-shaped film 36 or paper is interposed between the upper and lower layers 32 and 34 and bonded to the upper layer 32, and then the lower layer 34 adheres to the upper layer 32. Here, while an upper surface of the band-shaped film 36 first adheres to the upper layer 32, a lower surface of the band-shaped film 36 does not adhere to the lower layer 34. The portion of the upper layer 32 that does not adhere to the lower layer 34 due to the band-shaped film 36 forms the opening tab 32a.

However, in this conventional technique, because only a half portion of the upper layer 32 that has a circular shape adheres to the lower layer 34, the adhesive strength therebetween is not sufficient. Furthermore, if the strength with which the sealing cover 30 adheres to the container 10 is comparatively high, when the opening tab 32a is pulled, only the opening tab 32a may be separated from the sealing cover 30 rather than the sealing cover 30 being removed from the container 10.

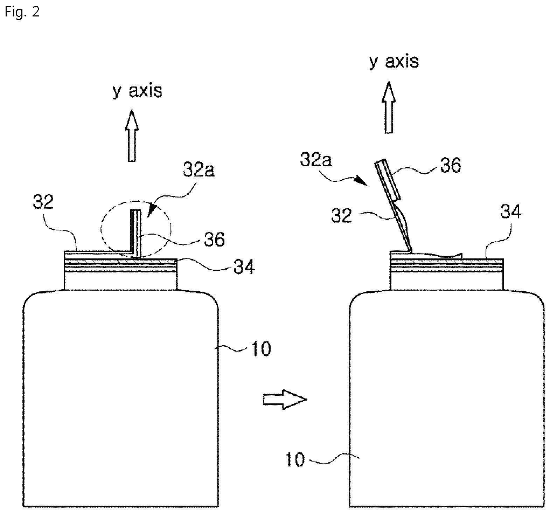

In other words, when the tab 32a is pulled in the y-axis direction, as shown in the right view of FIG. 2, a phenomenon of only the tab 32a being delaminated may be induced.

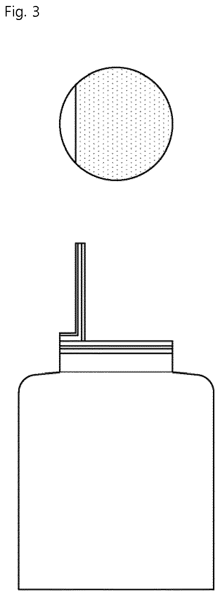

Meanwhile, in the case of a small sized sealing cover, as shown in FIG. 3, the opening tab 32a provided on the upper layer 32 may have almost circular shape, rather than having a semi-circular shape, so as to allow a user to easily grasp the opening tab 32a. In this case, the adhesive area between the polyester film that is the upper layer 32 and the lower layer 34 is further reduced. As a result, the delamination phenomenon is more easily caused.

### [Patent document]

Korean Patent Laid-open Publication No. 10-1992-7001009 (Publication date: Aug. 10, 1992)

US Patent Registration No. US6,497,336 (Publication date: Dec. 24, 2002)

US Patent Registration No. US4,960,216 (Publication date: Oct. 2, 1990)

Korean Patent Laid-open Publication No. 10-2007-0092985 (Publication date: Sep. 14, 2007)

### SUMMARY OF THE INVENTION

Accordingly, the present invention has been made keeping in mind the above problems occurring in the prior art, and an object of the present invention is to provide a sealing cover for containers in which the whole area of an upper layer provided with an opening tab substantially adheres to the lower layer with sufficient adhesive strength, whereby the sealing cover can be easily and reliably removed from a container regardless of whether the opening tab has a semi-circular shape or a circular shape.

Another aspect of the present invention provides a method for manufacturing the sealing cover.

In one aspect, the present invention provides a sealing cover as defined in claim 1.

The sealing cover includes an intermediate substrate layer interposed between the tab-forming layer and the sealing layer, the intermediate substrate layer providing a close contact function and a shock absorbing function when a cap is coupled to the container.

The sealing layer may include: an aluminium foil layer isolating an interior of the container from an exterior thereof, the aluminium foil layer generating heat through high-frequency induction heating; and a heat-sealing resin layer provided under the aluminium foil layer, the heat-sealing resin layer being adhered to the container by heat generated from the aluminium foil layer.

A thickness of the aluminium foil layer may range from 0.009 mm to 0.05 mm.

The heat-sealing resin layer may be made of one among polyolefin, EVA (ethylene vinyl acetate), EMA (ethylene methacrylic acid) and ionomer depending on a material of the container so as to provide an easy peel seal function.

A thickness of the heat-sealing resin layer may range from 0.03 mm to 0.1 mm.

The heat-sealing resin layer may include a film produced by a blown film method or is formed by an extrusion coating method.

A lower surface of the intermediate substrate layer and the aluminum foil layer provided in an upper portion of the sealing layer may be adhered to each other by a dry lamination method using a solvent-based urethane adhesive or by an extrusion lamination method of melting a raw material containing polyethylene, EVA (ethylene vinyl acetate) or EMAA (ethylene-methacrylic acid-acrylate) and extrusion-laminating.

The tab-forming layer may include: a surface layer formed of a PET (polyethylene terephthalate) or PP (polypropylene) film having no heat adhesive property, the surface layer having a thickness ranging from 0.012 mm to 0.05 mm, an inner or outer surface of the surface layer being printed by a gravure process; a first heat-adhesive resin layer formed under a lower surface of the surface layer; a folded film layer provided under a lower surface of the first heat-adhesive resin layer so as to form the opening tab, the folded film layer having a thickness ranging from 0.012 mm to 0.05 mm and being made of a PET (polyethylene terephthalate) or PP (polypropylene) film having no heat adhesive property, the folded film layer having a band shape formed in such a way that the PET or PP film folds double; and a second heat-adhesive resin layer adhering both to a lower surface of the folded film layer and to the first heat-adhesive resin layer that is exposed to an area other than the folded film layer.

The folded film layer may form the opening tab using a structure in which when the folded film layer is cut into a size capable of being inserted into a cap, inner surfaces of the folded film layer that face each other do not adhere to each other.

The folded film layer may be folded double on one side or both sides thereof.

The folded film layer may be folded double in such a way that a cylindrical film roll is pressed to be flat.

The first heat-adhesive resin layer and the second heat-adhesive resin layer may be formed by an extrusion lamination method and are made of any one among EVA (ethylene vinyl acetate), EMAA (ethylene-methacrylic acid-acrylate) and polyolefin-based adhesive resin containing polyethylene.

The first heat-adhesive resin layer and the second heat-adhesive resin layer may be made of ethylene-methacrylic acid-acrylate terpolymer resin which is produced by DuPont Inc. and sold in a brand name "Nucrel" that is able to adhere to the PET or PP film without conducting a separate chemical primer process.

In another aspect, the present invention provides a method for manufacturing a sealing cover as defined in claim 12.

The first heat-adhesive resin layer may be formed by an extrusion lamination method of melting adhesive resin and extrusion-adhering the surface layer to the folded film layer.

The second heat-adhesive resin layer may be formed by an extrusion lamination method of melting adhesive resin equal to the adhesive resin forming the first heat-adhesive resin layer and extrusion-adhering the sealing layer both to the lower surface of the folded film layer and to the portion of the first heat-adhesive resin layer that is other than the lower surface of the folded film layer.

The folded film may form the opening tap using a structure in which when the folded film layer is cut into a size capable of being inserted into a cap, inner surfaces of the folded film layer that face each other do not adhere to each other.

The folded film layer may be folded double on one side or both sides thereof

The folded film layer may be folded double in such a way that a cylindrical film roll is pressed to be flat.

The first heat-adhesive resin layer and the second heat-adhesive resin layer may be made of any one among EVA (ethylene vinyl acetate), EMAA (ethylene-methacrylic acid-acrylate) and polyolefin-based adhesive resin containing polyethylene.

The first heat-adhesive resin layer and the second heat-adhesive resin layer may be made of ethylene-methacrylic acid-acrylate terpolymer resin which is produced by DuPont Inc. and sold in a brand name "Nucrel" that is able to adhere to the PET or PP film without conducting a separate chemical primer process.

In a sealing cover for containers according to the present invention, an opening tab which is provided on an upper surface of the sealing cover can not only have a semi-circular shape but can also have an almost circular shape. Therefore, a consumer can more conveniently and easily open the container.

Furthermore, with regard to adhesion between layers that forms the opening tab, unlike the conventional technique, in the sealing cover according to the present invention, because the whole area of an upper layer that forms the opening tab substantially adhere to a lower layer, a delamination phenomenon in which only the opening tab is removed from the sealing cover when the container is opened can be prevented. Therefore, the present invention can provide the container sealing cover that has a more reliable structure.
A third aspect of the invention provides a container as defined in claim 15.

### BRIEF DESCRIPTION OF THE DRAWINGS

The above and other features and advantages of the present invention will be more clearly understood from the following detailed description taken in conjunction with the accompanying drawings, in which:
FIGS. 1A and 1B show a conventional sealing cover;
FIG. 2 shows a delamination phenomenon of the conventional sealing cover in which only an opening tab is removed therefrom;
FIG. 3 shows opening tab provided on the upper layer with an almost circular shape;
FIG. 4 is a perspective view illustrating a container provided with a sealing cover according to an embodiment of the present invention;
FIGS. 5A and 5B illustrate a method of removing the sealing cover according to the present invention from the container;
FIG. 6 is a view showing the construction of the sealing cover according to the present invention;
FIGS. 7 through 8 are views showing a method for manufacturing the sealing cover according to the present invention; and
FIGS. 9A and 9B are views schematically illustrating a method of cutting out the sealing cover according to the present invention.

### DESCRIPTION OF THE PREFERRED EMBODIMENTS

Hereinafter, the construction and operation of an embodiment of the present invention will be described in detail with reference to the attached drawings.

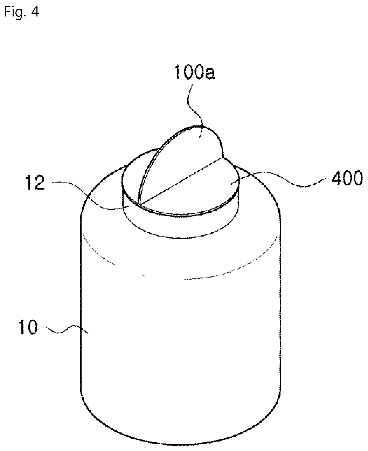

FIG. 4 is a perspective view illustrating a container provided with a container sealing cover (hereinafter, referred to as a sealing cover 400) according to the embodiment of the present invention.

Referring to FIG. 4, the sealing cover 400 according to the present invention has an opening tab 100a on an upper surface thereof. An aperture 12 of the container is sealed with the sealing cover 400. Sealing the aperture 12 with the sealing cover 400 is sealing cover 400 can be achieved by high-frequency induction heating.

That is, the sealing cover 400 is thermally sealed to the container 10 by disposing the sealing cover 400 inside a container cap (not shown), closing the cap, and then high-frequency induction heating.

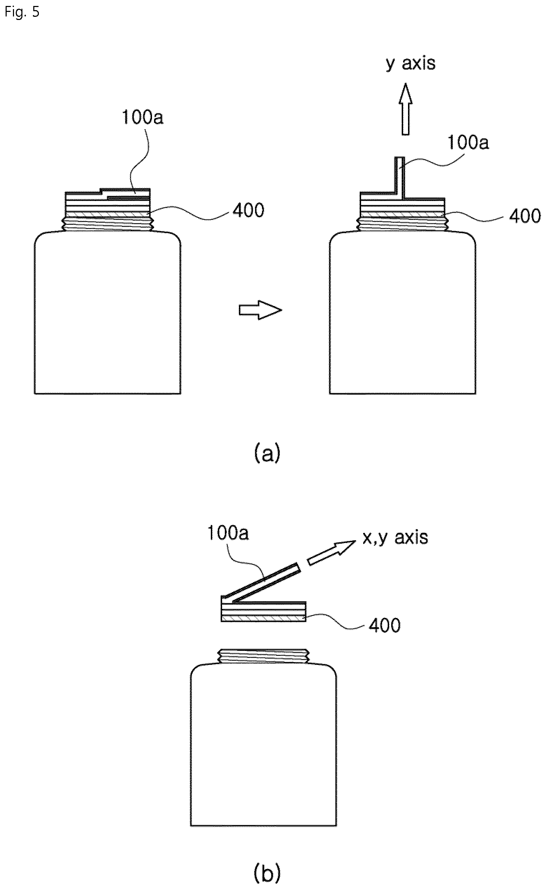

FIGS. 5A and 5B illustrate a method of removing the sealing cover 400 from the container 10.

To enable a user to conveniently open the container 10 that is sealed with the sealing cover 400, the present invention is configured such that the sealing cover 400 is removed from the aperture 12 by rotating upwards the semi-circular or circular opening tab 100a provided on the upper surface of the sealing cover 400 that has sealed the aperture 12 and pulling the opening tab 100a in an y-axis direction.

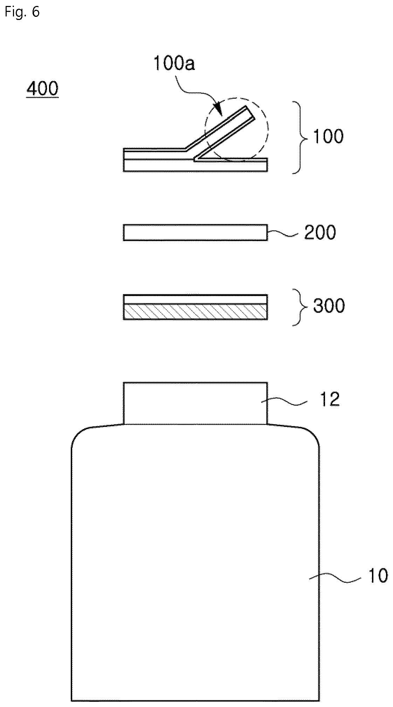

FIG. 6 is a view showing the construction of the sealing cover 400 according to the present invention.

Referring to FIG. 6, the sealing cover 400 according to the present invention includes three layers, that is, a tab-forming layer 100, an intermediate substrate layer 200 and a sealing layer 300. The tab-forming layer 100 forms the opening tab 100a. The intermediate substrate layer 200 functions to ensure close contact between the container 10 and the sealing cover 400 when the cap (not shown) having the sealing cover 400 therein is tightened over the container 10 and prevent heat generated from an aluminum foil layer by high-frequency induction heating from being transferred to the upper portion of the sealing cover 400. The sealing layer 300 substantially seals the container 10 and isolates contents in the container 10 from the outside.

The tab-forming layer 100 includes a surface layer 102, a first heat-adhesive resin layer 104, a folded film layer 106 and a second heat-adhesive resin layer 108.

The surface layer 102 is formed of a PET or PP film that has no heat adhesive property. The thickness of the surface layer 102 ranges from 0.012 mm to 0.05 mm. The inner or outer surface of the surface layer 102 can be printed by a gravure method.

The first heat-adhesive resin layer 104 adheres the folded film layer 106 to the surface layer 102.

The folded film layer 106 is provided to form the opening tab and formed of a PET or PP film that has no heat adhesive property. The thickness of the folded film layer 106 ranges from 0.012 mm to 0.05 mm. The folded film layer 106 has a band shape formed in such a way that the PET or PP film folds double with a width ranging from 20 mm to 150 mm.

In other words, the folded film layer 106 can be formed by folding the band-shaped PET or PP film having a predetermined width in half.

The width of the folded film layer 106 is determined in response to the diameter of the aperture 12.

The second heat-adhesive resin layer 108 is provided under a lower surface of the folded film layer 106. In detail, the second heat-adhesive resin layer 108 adheres both to the lower surface of the folded film layer 106 and the first heat-adhesive resin layer 104.

The intermediate substrate layer 200 is interposed between the tab-forming layer 100 and the sealing layer 300. The intermediate substrate layer 200 functions not only to provide a close contact effect and a shock absorbing effect when the cap (not shown) is coupled to a rim part of the container that defines the aperture 12 therein, but also to prevent heat generated from the aluminum foil layer 302 formed in a lower portion of the sealing cover from being transferred to the upper portion of the sealing cover when high-frequency induction heating adhesion is conducted.

The sealing layer 300 includes the aluminum foil layer 302 which substantially isolates the interior of the container 10 from the outside and generates heat through high-frequency induction heating, and a heat-sealing resin layer 304 which is provided under the aluminum foil layer 302 and is adhered to the rim part that defines the aperture 12 therein by heat generated from the aluminum foil layer 302.

Preferably, the heat-sealing resin layer 304 is formed of a film which is produced by a blown film method or by extrusion coating.

Referring to FIG. 6 again, both lower surface of the folded film layer 106 and a portion of the folded film layer 106 that adheres to the surface layer 102 form the opening tab 100a. As such, because the opening tab 100a has a double structure, the tensile strength thereof can be enhanced. Therefore, the present invention can prevent a phenomenon in which only the opening tab 100a is removed from the sealing cover 400 when it is pulled.

Meanwhile, the length of the part that forms the opening tab 100a and the length of the part that adheres to the second heat-adhesive resin layer 108 are determined by a position at which the folded film layer 106 is cut to form the sealing cover 400. In other words, the position at which the folded film layer 106 is cut when the sealing cover 400 is manufactured can be appropriately adjusted in such a way that, in the case of the aperture that has a comparatively small area, both the length of the part that forms the opening tab 100a and the length of the part that adheres to the second heat-adhesive resin layer 108 are sufficiently long, and in the case of the aperture that has a comparatively large area, the length of the part that forms the opening tab 100a is comparatively short while the length of the part that adheres to the second heat-adhesive resin layer 108 is sufficiently long.

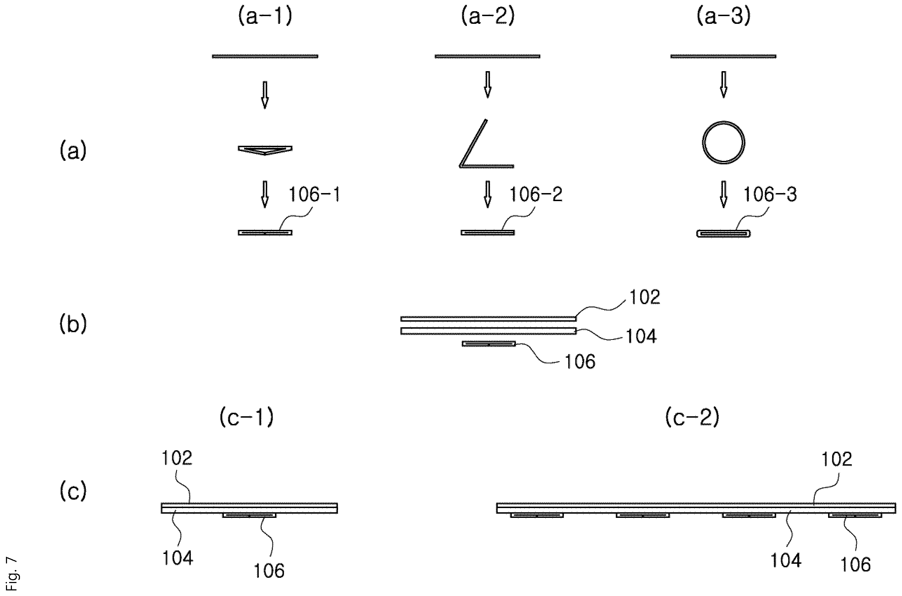

FIGS. 7 through 8 are views showing a method for manufacturing the sealing cover according to the present invention.

To form the semi-circular or circular opening tab 100a on the upper surface of the sealing cover 400, as shown in FIG. 7A-1, a PET or PP film which has no heat adhesive property and has a thickness ranging from 0.012 mm to 0.05 mm and a width ranging from 20 mm to 150 mm may be folded on both sides thereof to form a folded film layer 106-1. Alternatively, as shown in FIG. 7A-2, the PET or PP film may be folded in half to form a folded film layer 106-2. As a further alternative, as shown in FIG. 7A-3, the PET or PP film may be rolled in a cylindrical shape by bonding the opposite edges thereof to each other and then pressed to be flat, thus forming a folded film layer 106-3. Here, the term "heat adhesive properties" means properties in which adhesive force occurs when it is heated, for example, by high-frequency induction heating. The width of the PET or PP film that is used to form the folded film layer can be appropriately determined depending on the diameter of the aperture of the container.

Thereafter, the surface layer 102, the intermediate substrate layer 200 and the sealing layer 300 are prepared.

Although the above-mentioned folded film layers 106 have different shapes, the final shape thereof becomes the same as that of FIG. 7B, and it is only a matter of whether the folded film layer 106 is cut in a row or two rows when it is cut to have a predetermined size and circular shape in which the product is finally disposed in the cap.

The folded film layer 106 formed by the above-mentioned method adheres to the lower surface of the surface layer 102 that is the uppermost surface of the sealing cover 400. The surface layer 102 is made of a PET or PP film which has no heat adhesive property and high tensile strength, and the thickness of which ranges 0.012 mm to 0.05 mm. Adhesion between the surface layer 102 and the folded film layer 106 is embodied by an extrusion lamination method in which adhesive resin is melted and applied therebetween and they are adhered to each other by extruding.

In this embodiment, the first heat-adhesive resin layer 104 that has a thickness ranging from 0.015 mm to 0.04 mm and contains polyolefin-based resin such as polyethylene, etc. EVA (ethylene vinyl acetate) or EAA (ethylene acrylic acid) is used in the extrusion lamination.

More preferably, because the surface layer 102 and the folded film layer 106 that is disposed under the first heat-adhesive resin layer 104 are made of PET films, ethylene-methacrylic acid-acrylate terpolymer resin, for example, which is produced by DuPont Inc. and sold in a brand name "Nucrel", which can strongly adhere to a PET film without conducting a separate chemical primer process, is used.

In an actual production process, as shown in FIG. 7C-2, in consideration of the productivity, several folded film layers 106 are arranged at positions spaced apart from each other at appropriate intervals and adhere together to the lower surface of the surface layer 102 that is formed of a PET film having a comparatively large width.

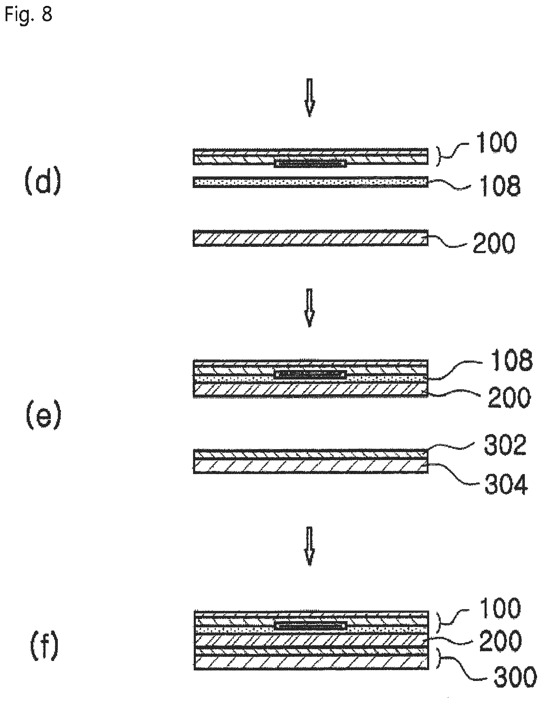

After the first-step extrusion laminating process using the first heat-adhesive resin layer 104 has been conducted, as shown in FIG. 8D, the surface layer 102 and the folded film layer 106 that have adhered to each other through the first-step adhesion process adhere to the intermediate substrate layer 200, thus forming a second-step adhesion product.

The intermediate substrate layer 200 is formed of a polyolefin-based film or foam that has a thickness ranging from 0.03 mm to 3 mm.

The adhesion in the second-step adhesion process is embodied by extrusion lamination using the second heat-adhesive resin layer 108 which is made of ethylene-methacrylic acid-acrylate terpolymer resin that is the same material as that of the first heat-adhesive resin layer 104.

The tab-forming layer 100 and the intermediate substrate layer 200 that have been formed through the above-mentioned process adhere at a lower surface thereof to the sealing layer 300 which substantially has container sealing function. The sealing layer 300 includes the aluminum foil layer 302 which is disposed at an upper position, and a heat-sealing resin layer 304 which is disposed at a lower position and has an easy peel seal function such that it can be easily sealed to the container 10.

The adhesion between the lower surface of the intermediate substrate layer 200 and the aluminum foil layer 302 of the sealing layer 300 is embodied by a dry lamination method which is a typical method of adhering plastic films to each other using a solvent-based urethane adhesive, or an extrusion lamination method in which the layers are laminated by melting raw material containing polyethylene, EVA (ethylene vinyl acetate), EMAA (ethylene-methacrylic acid-acrylate), etc. and by extruding the layers with the melted raw material.

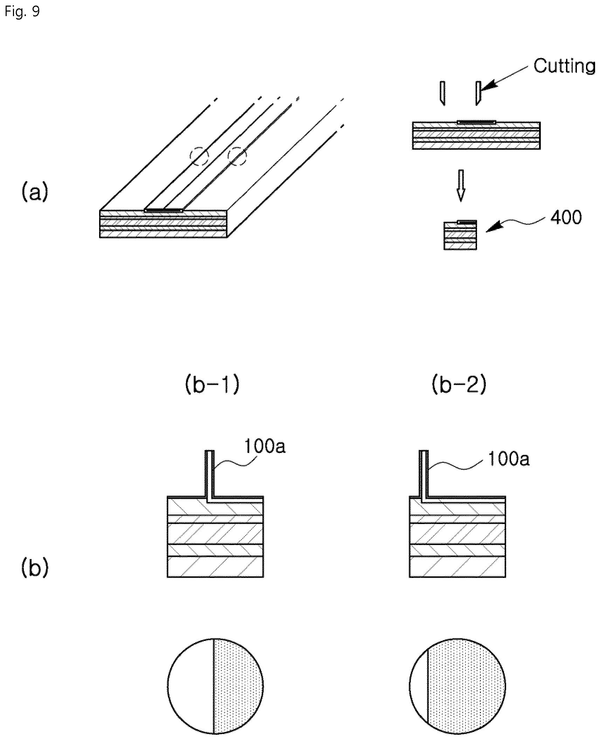

As shown in examples of FIG. 9, the sealing cover 400 is formed in a circular shape corresponding to the size of the cap by cutting or punching the half-finished product manufactured through the above-mentioned process.

FIGS. 9A and 9B are views schematically illustrating a method of cutting out the sealing cover 400 according to the present invention.

Referring to FIG. 9, the length of the part that forms the opening tab 100a and the length of the part that adheres to the second heat-adhesive resin layer 108 are determined by a position at which the folded film layer 106 is cut to form the sealing cover 400.

As shown in FIG. 9B-1, with regard to the aperture that has a comparatively large area, the sealing cover 400 is formed such that the length of the part that forms the opening tab 100a is comparatively short while the length of the part that adheres to the second heat-adhesive resin layer 108 is sufficiently long.

Meanwhile, as shown in FIG. 9B-2, with regard to the aperture that has a comparatively small area, the sealing cover 400 is formed such that both the length of the part that forms the opening tap 100a and the length of the part that adheres to the second heat-adhesive resin layer 108 are sufficiently long.

Unlike the conventional sealing cover having the semi-circular opening tab, in the sealing cover according to the the present invention, the opening tab which is provided on the upper surface of the sealing cover may not only have a semi-circular shape but may also have an almost circular shape, Therefore, a consumer can more conveniently and easily open the container.

Furthermore, with regard to adhesion between layers that forms the opening tab, in the sealing cover according to the present invention, because the layers that form the opening tab adhere to each other in the entire area thereof, a delamination phenomenon in which only the opening tab is removed from the sealing cover when the container is opened can be prevented. Therefore, the present invention can provide the container sealing cover that has a more reliable structure.

Although the container sealing cover having the opening tab and the method for manufacturing the sealing cover according to the embodiment of the present invention have been disclosed for illustrative purposes, those skilled in the art will appreciate that various modifications, additions and substitutions are possible, without departing from the scope of the invention as disclosed in the accompanying claims.

## Claims

1. A sealing cover (400) having an opening tab (100a) for a container (10), comprising:
a tab-forming layer (100) provided with the opening tab (100a); and
a sealing layer (300) adhered to the tab-forming layer, the sealing layer adapted to seal the container;
wherein the tab-forming layer comprises:
a surface layer (102) formed of a PET (polyethylene terephthalate) or PP (polypropylene) film;
a first heat-adhesive resin layer (104) formed on a lower surface of the surface layer;
a folded film layer (106) adhered to a part of the first heat-adhesive resin layer so as to form the opening tab, and
a second heat-adhesive resin layer (108) formed on the lower surface of the folded film layer and on the part of the first heat-adhesive resin layer that is not covered by the folded film layer;
and **characterised by** further comprising:
an intermediate substrate layer (200) interposed between the tab-forming layer and the sealing layer, the intermediate substrate layer being formed of shock-absorbing insulating film or foam material.

2. The sealing cover as set forth in claim 1, wherein the sealing layer comprises:
an aluminium foil layer (302) adapted to isolate an interior of the container from an exterior thereof, the aluminium foil layer adapted to generate heat through high-frequency induction heating; and
a heat-sealing resin layer provided under the aluminium foil layer, the heat-sealing resin layer adapted to be adhered to the container by heat generated in the aluminium foil layer.

3. The sealing cover as set forth in claim 2, wherein a thickness of the aluminium foil layer (302) ranges from 0.009 mm to 0.05 mm.

4. The sealing cover as set forth in claim 3, wherein the heat-sealing resin layer (304) is made of one of: polyolefin, EVA (ethylene vinyl acetate), EMA (ethylene methacrylic acid) and ionomer so as to provide an easy peel function.

5. The sealing cover as set forth in claim 4, wherein a thickness of the heat-sealing resin layer (304) ranges from 0.03 mm to 0.1 mm.

6. The sealing cover as set forth in claim 5, wherein the heat-sealing resin layer (304) comprises a film produced by a blown film method or is formed by an extrusion coating method.

7. The sealing cover as set forth in claim 2, wherein a lower surface of the intermediate substrate layer (200) and the aluminium foil layer (302) provided in an upper portion of the sealing layer (300) are adhered to each other by a dry lamination method using a solvent-based urethane adhesive or by an extrusion lamination method of melting a raw material containing polyethylene, EVA (ethylene vinyl acetate) or EMAA (ethylene-methacrylic acid-acrylate) and extrusion-laminating.

8. The sealing cover as set forth in claim 1, wherein the tab-forming layer comprises:
a surface layer formed of a PET (polyethylene terephthalate) or PP (polypropylene) film having no heat adhesive property, the surface layer having a thickness ranging from 0.012 mm to 0.05 mm, an inner or outer surface of the surface layer being printed by a gravure process;
a first heat-adhesive resin layer formed under a lower surface of the surface layer;
a folded film layer provided under a lower surface of the first heat-adhesive resin layer so as to form the opening tab, the folded film layer having a thickness ranging from 0.012 mm to 0.05 mm and being made of a PET (polyethylene terephthalate) or PP (polypropylene) film having no heat adhesive property, the folded film layer having a band shape formed in such a way that the PET or PP film folds double; and
a second heat-adhesive resin layer adhering both to a lower surface of the folded film layer and to the first heat-adhesive resin layer that is exposed to an area other than the folded film layer.

9. The sealing cover as set forth in claim 8, wherein the folded film layer (106) forms the opening tab using a structure in which when the folded film layer is cut into a size capable of being inserted into a cap, inner surfaces of the folded film layer that face each other do not adhere to each other.

10. The sealing cover as set forth in claim 8, wherein the sealing cover (400) is circular and the folded film layer (106) forms a semicircular opening tab.

11. The sealing cover as set forth in claim 8, wherein the folded film layer is folded double by pressing a cylindrical film roll so as to be flat.

12. A method of forming a sealing cover (400) according to any of claims 1-11 for a container (10), the sealing cover having:
a tab-forming layer (100) provided with an opening tab (100a); and
a sealing layer (300) adapted to seal the container;
comprising the steps of:
providing a surface layer (102) formed of a PET (polyethylene terephthalate) or PP (polypropylene) film;
applying a first heat-adhesive resin layer (104) on a lower surface of the surface layer (102);
adhering an upper surface of a folded film layer (106) on a part of the first heat-adhesive resin layer (104) so as to form the opening tab;
and **characterised by** the steps of:
applying a second heat-adhesive resin layer (108) to the lower surface of the folded film layer (106) and to the part of the first heat-adhesive resin layer (104) that is not covered by the folded film layer (106); and
adhering the sealing layer (300) to the lower surface of the second heat-adhesive resin layer (108) to adhere the sealing layer to the lower surface of the folded film layer (106) and to the surface layer (102) by:
adhering the upper surface of an intermediate substrate layer (200) to the lower surface of the second heat-adhesive resin layer (108); and
adhering the sealing layer (300) to the lower surface of the intermediate substrate layer (200); and
cutting the resultant product to form a sealing cover such that a portion of the folded film layer forms an opening tab.

13. The method of claim 12 , wherein the first heat-adhesive resin layer (104) and the second heat-adhesive resin layer (108) are formed by an extrusion lamination method and are made of any one of EVA (ethylene vinyl acetate), EMAA (ethylene-methacrylic acid-acrylate) and polyolefin-based adhesive resin containing polyethylene.

14. The method as set forth in claim 12, wherein the first heat-adhesive resin layer (104) and the second heat-adhesive resin layer (108) are made of an ethylene-methacrylic acid-acrylate terpolymer resin which is able to adhere to PET or PP film without conducting a separate chemical primer process.

15. A container sealed by a sealing cover according to any of claims 1 to 11.

## Patentansprüche

1. Verschlussdeckel (400) mit einer Öffnungslasche (100a) für einen Behälter (10), umfassend:
eine laschenbildende Schicht (100), die mit der Öffnungslasche (100a) versehen ist; und
eine Dichtungsschicht (300), die an der laschenbildenden Schicht haftet, wobei die Dichtungsschicht zum Abdichten des Behälters ausgebildet ist;
wobei die laschenbildende Schicht umfasst:
eine Oberflächenschicht (102), die aus einem PET-Film (Polyethylenterephthalat-Film) oder PP-Film (Polypropylen-Film) gebildet ist;
eine erste Heißklebeharzschicht (104), die auf einer Unterseite der Oberflächenschicht ausgebildet ist;
eine Faltfilmschicht (106), die an einem Teil der ersten Heißklebeharzschicht haftete, um so die Öffnungslasche auszubilden, und
eine zweite Heißklebeharzschicht (108), die auf der Unterseite der Faltfilmschicht und auf dem Teil der ersten Heißklebeharzschicht, der nicht von der Faltfilmschicht bedeckt ist, ausgebildet ist;
und **dadurch gekennzeichnet, dass** ferner umfasst ist:
eine Zwischensubstratschicht (200), die zwischen der laschenbildenden Schicht und der Dichtungsschicht angeordnet ist, wobei die Zwischensubstratschicht aus stoßabsorbierendem Isolierfilm oder Schaumstoffmaterial gebildet ist.

2. Verschlussdeckel nach Anspruch 1, wobei die Dichtungsschicht umfasst:
eine Aluminiumfolienschicht (302), die geeignet ist, ein Inneres des Behälters von einem Äußeren davon zu isolieren; wobei die Aluminiumfolienschicht geeignet ist, durch Hochfrequenzinduktionsheizen Wärme zu erzeugen; und
eine Heißversiegelungsharzschicht, die unter der Aluminiumfolienschicht vorgesehen ist, wobei die Heißversiegelungsharzschicht geeignet ist, durch in der Aluminiumfolienschicht erzeugte Wärme an dem Behälter zu haften.

3. Verschlussdeckel nach Anspruch 2, wobei eine Dicke der Aluminiumfolienschicht (302) im Bereich von 0,009 mm bis 0,05 mm liegt.

4. Verschlussdeckel nach Anspruch 3, wobei die Heißversiegelungsharzschicht (304) hergestellt ist aus einem von: Polyolefin, EVA (Ethylenvinylacetat), EMA (Ethylenmethacrylsäure) und Ionomer, um so eine Funktion des leichten Ablösens bereitzustellen.

5. Verschlussdeckel nach Anspruch 4, wobei eine Dicke der Heißversiegelungsharzschicht (304) im Bereich von 0,03 mm bis 0,1 mm liegt.

6. Verschlussdeckel nach Anspruch 5, wobei die Heißversiegelungsharzschicht (304) einen durch ein Blasfolienverfahren hergestellten Film umfasst oder durch ein Extrusionsbeschichtungsverfahren gebildet ist.

7. Verschlussdeckel nach Anspruch 2, wobei eine Unterseite der Zwischensubstratschicht (200) und die in einem oberen Teil der Dichtungsschicht (300) vorgesehene Aluminiumfolienschicht (302) miteinander verklebt sind durch ein Trockenlaminierverfahren unter Verwenden eines Lösungsmittel-basierten Urethanklebstoffs oder durch ein Extrusionslaminierverfahren des Schmelzens eines Rohmaterials enthaltend Polyethylen, EVA (Ethylenvinylacetat) oder EMAA (Ethylen-Methacrylsäure-Acrylat) und Extrusionslaminierens.

8. Verschlussdeckel nach Anspruch 1, wobei die laschenbildende Schicht umfasst:
eine Oberflächenschicht, die aus einem PET-Film (Polyethylenterephthalat-Film) oder PP-Film (Polypropylen-Film) ohne Heißklebeeigenschaft gebildet ist, wobei die Oberflächenschicht eine Dicke im Bereich von 0,012 mm bis 0,05 mm aufweist, wobei eine Innen- oder Außenoberfläche der Oberflächenschicht mit einem Tiefdruckverfahren bedruckt ist;
eine erste Heißklebeharzschicht, die unter einer Unterseite der Oberflächenschicht ausgebildet ist;
eine Faltfilmschicht, die unter einer Unterseite der ersten Heißklebeharzschicht vorgesehen ist, um so die Öffnungslasche auszubilden, wobei die Faltfilmschicht eine Dicke im Bereich von 0,012 mm bis 0,05 mm aufweist und aus einem PET-Film (Polyethylenterephthalat-Film) oder PP-Film (Polypropylen-Film) ohne Heißklebeeigenschaft hergestellt ist, wobei die Faltfilmschicht eine Bandform aufweist, die so ausgebildet ist, dass der PET- oder PP-Film doppelt gefaltet ist; und
eine zweite Heißklebeharzschicht, die sowohl an einer Unterseite der Faltfilmschicht als auch an der ersten Heißklebeharzschicht, die zu einer anderen Fläche als der Faltfilmschicht freiliegt, haftet.

9. Verschlussdeckel nach Anspruch 8, wobei die Faltfilmschicht (106) die Öffnungslasche unter Verwendung einer Struktur bildet, in der, wenn die Faltfilmschicht zu einer Größe geschnitten wird, die in einen Deckel eingesetzt werden kann, Innenflächen der Faltfilmschicht, die einander gegenüberliegen, nicht aneinander haften.

10. Verschlussdeckel nach Anspruch 8, wobei der Verschlussdeckel (400) kreisförmig ist und die Faltfilmschicht (106) eine halbkreisförmige Öffnungslasche bildet.

11. Verschlussdeckel nach Anspruch 8, wobei die Faltfilmschicht durch Flachpressen einer zylindrischen Filmrolle doppelt gefaltet ist.

12. Verfahren zur Herstellung eines Verschlussdeckels (400), gemäß einem der Ansprüche 1 bis 11, für einen Behälter (10), wobei der Verschlussdeckel aufweist:
eine laschenbildende Schicht (100), die mit einer Öffnungslasche (100a) versehen ist; und
eine Dichtungsschicht (300), die zum Abdichten des Behälters ausgebildet ist;
umfassend die Schritte:
Bereitstellen einer Oberflächenschicht (102), die aus einem PET-Film (Polyethylenterephthalat-Film) oder PP-Film (Polypropylen-Film) gebildet ist;
Aufbringen einer ersten Heißklebeharzschicht (104) auf eine Unterseite der Oberflächenschicht (102);
Anhaften einer Oberseite einer Faltfilmschicht (106) an einen Teil der ersten Heißklebeharzschicht (104), um so die Öffnungslasche zu bilden;
und das **gekennzeichnet ist durch** die Schritte:
Aufbringen einer zweiten Heißklebeharzschicht (108) auf die Unterseite der Faltfilmschicht (106) und auf den Teil der ersten Heißklebeharzschicht (104), der nicht von der Faltfilmschicht (106) bedeckt ist; und
Anhaften der Dichtungsschicht (300) an die Unterseite der zweiten Heißklebeharzschicht (108), um die Dichtungsschicht an die Unterseite der Faltfilmschicht (106) und an die Oberflächenschicht (102) zu haften, **durch**:
Anhaften der Oberseite einer Zwischensubstratschicht (200) an die Unterseite der zweiten Heißklebeharzschicht (108); und
Anhaften der Dichtungsschicht (300) an die Unterseite der Zwischensubstratschicht (200); und
Schneiden des resultierenden Produkts, um eine Verschlussdeckel zu bilden, derart, dass ein Teil der Faltfilmschicht eine Öffnungslasche ausbildet.

13. Verfahren nach Anspruch 12, wobei die erste Heißklebeharzschicht (104) und die zweite Heißklebeharzschicht (108) durch ein Extrusionslaminierverfahren ausgebildet werden und aus irgendeinem von EVA (Ethylenvinylacetat), EMAA (Ethylen-Methacrylsäure-Acrylat) und Polyolefin-basiertem Klebeharz, das Polyethylen enthält, gebildet sind.

14. Verfahren nach Anspruch 12, wobei die erste Heißklebeharzschicht (104) und die zweite Heißklebeharzschicht (108) aus einem Ethylen-Methacrylsäure-Acrylat-Terpolymerharz hergestellt sind, das, ohne einen separaten chemischen Primer-Prozess durchzuführen, an einen PET- oder PP-Film haften kann.

15. Behälter, der durch einen Verschlussdeckel gemäß einem der Ansprüche 1 bis 11 abgedichtet ist.

## Revendications

1. Couvercle d'étanchéité (400) comportant une languette d'ouverture (100a) pour un récipient (10), comprenant :
une couche de formation de languette (100) dotée de la languette d'ouverture (100a) ; et
une couche d'étanchéité (300) adhérant à la couche de formation de languette, la couche d'étanchéité étant adaptée pour sceller le récipient ;
dans lequel la couche de formation de languette comprend :
une couche de surface (102) formée d'un film de PET (poly(téréphtalate d'éthylène)) ou de PP (polypropylène) ; une première couche de résine thermocollante (104) formée sur une surface inférieure de la couche de surface ;
une couche de film plié (106) adhérant à une partie de la première couche de résine thermocollante de façon à former la languette d'ouverture, et
une deuxième couche de résine thermocollante (108) formée sur la surface inférieure de la couche de film plié et sur la partie de la première couche de résine thermocollante qui n'est pas couverte par la couche de film plié ;
et **caractérisé en ce qu'**il comprend en outre :
une couche de substrat intermédiaire (200) interposée entre la couche de formation de languette et la couche d'étanchéité, la couche de substrat intermédiaire étant formée d'un matériau en mousse ou en film isolant absorbant les chocs.

2. Couvercle d'étanchéité selon la revendication 1, dans lequel la couche d'étanchéité comprend :
une couche de feuille d'aluminium (302) adaptée pour isoler l'intérieur d'un récipient vis-à-vis de l'extérieur de celui-ci, la couche de feuille d'aluminium étant adaptée pour générer de la chaleur par l'intermédiaire d'un chauffage par induction haute fréquence ; et
une couche de résine thermoscellable disposée sous la couche de feuille d'aluminium, la couche de résine thermoscellable étant adaptée pour adhérer au récipient par la chaleur générée dans la couche de feuille d'aluminium.

3. Couvercle d'étanchéité selon la revendication 2, dans lequel l'épaisseur de la couche de feuille d'aluminium (302) est située dans la plage allant de 0,009 mm à 0,05 mm.

4. Couvercle d'étanchéité selon la revendication 3, dans lequel la couche de résine thermoscellable (304) est faite en l'un parmi : une polyoléfine, l'EVA (éthylène-acétate de vinyle), l'EMA (éthylène-acide méthacrylique) et un ionomère de façon à assurer une fonction de pelage facile.

5. Couvercle d'étanchéité selon la revendication 4, dans lequel l'épaisseur de la couche de résine thermoscellable (304) est située dans la plage allant de 0,03 mm à 0,1 mm.

6. Couvercle d'étanchéité selon la revendication 5, dans lequel la couche de résine thermoscellable (304) comprend un film produit par un procédé de soufflage de film ou est formée par un procédé de revêtement par extrusion.

7. Couvercle d'étanchéité selon la revendication 2, dans lequel une surface inférieure de la couche de substrat intermédiaire (200) et la couche de feuille d'aluminium (302) disposée dans une partie supérieure de la couche d'étanchéité (300) adhèrent l'une à l'autre au moyen d'un procédé de stratification à sec utilisant un adhésif de type uréthane à base de solvant ou au moyen d'un procédé de stratification par extrusion consistant en la fusion d'une matière première contenant du polyéthylène, de l'EVA (éthylène-acétate de vinyle) ou de l'EMAA (éthylène-acide acrylique-méthacrylate) et une extrusion-stratification.

8. Couvercle d'étanchéité selon la revendication 1, dans lequel la couche de formation de languette comprend :
une couche de surface formée d'un film de PET (poly(téréphtalate d'éthylène) ou de PP (polypropylène) ne présentant pas de propriété de thermocollage, la couche de surface présentant une épaisseur située dans la plage allant de 0,012 mm à 0,05 mm, une surface intérieure ou extérieure de la couche de surface étant imprimée au moyen d'un procédé de gravure ;
une première couche de résine thermocollante formée sous une surface inférieure de la couche de surface ;
une couche de film plié disposée sous une surface inférieure de la première couche de résine thermocollante de façon à former la languette d'ouverture, la couche de film plié présentant une épaisseur située dans la plage allant de 0,012 mm à 0,05 mm et étant faite en un film de PET (poly(téréphtalate d'éthylène)) ou de PP (polypropylène) ne présentant pas de propriété de thermocollage, la couche de film plié présentant une forme de bande formée de sorte que le film de PET ou de PP se plie en double ; et
une deuxième couche de résine thermocollante adhérant à la fois à une surface inférieure de la couche de film plié et à la première couche de résine thermocollante qui est exposée à une surface autre que la couche de film plié.

9. Couvercle d'étanchéité selon la revendication 8, dans lequel la couche de film plié (106) forme la languette d'ouverture utilisant une structure dans laquelle, quand la couche de film plié est découpée à une taille permettant son insertion dans un capuchon, les surfaces intérieures de la couche de film plié qui se font mutuellement face n'adhèrent pas l'une à l'autre.

10. Couvercle d'étanchéité selon la revendication 8, lequel couvercle d'étanchéité (400) est circulaire, dans lequel la couche de film plié (106) forme une languette d'ouverture semi-circulaire.

11. Couvercle d'étanchéité selon la revendication 8, dans lequel la couche de film plié est pliée en double par pressage d'un rouleau de film cylindrique de façon qu'elle soit plate.

12. Procédé pour former un couvercle d'étanchéité (400) selon l'une quelconque des revendications 1 à 11 pour un récipient (10), le couvercle d'étanchéité possédant :
une couche de formation de languette (100) dotée d'une languette d'ouverture (100a) ; et
une couche d'étanchéité (300) adaptée pour sceller le récipient ;
comprenant les étapes consistant à :
se procurer une couche de surface (102) formée d'un film de PET (poly(téréphtalate d'éthylène)) ou de PP (polypropylène) ;
appliquer une première couche de résine thermocollante (104) sur une surface inférieure de la couche de surface (102) ;
faire adhérer une surface supérieure d'une couche de film plié (106) sur une partie de la première couche de résine thermocollante (104) de façon à former la languette d'ouverture ;
et **caractérisé par** les étapes consistant à :
appliquer une deuxième couche de résine thermocollante (108) sur la surface inférieure de la couche de film plié (106) et sur la partie de la première couche de résine thermocollante (104) qui n'est pas couverte par la couche de film plié (106) ; et
faire adhérer la couche d'étanchéité (300) à la surface inférieure de la deuxième couche de résine thermocollante (108) pour que la couche d'étanchéité adhère à la surface inférieure de la couche de film plié (106) et à la couche de surface (102) par les opérations consistant à :
faire adhérer la surface supérieure d'une couche de substrat intermédiaire (200) à la surface inférieure de la deuxième couche de résine thermocollante (108) ; et
faire adhérer la couche d'étanchéité (300) à la surface inférieure de la couche de substrat intermédiaire (200) ; et
découper le produit résultant pour former un couvercle d'étanchéité de sorte qu'une partie de la couche de film plié forme une languette d'ouverture.

13. Procédé selon la revendication 12, dans lequel la première couche de résine thermocollante (104) et la deuxième couche de résine thermocollante (108) sont formées par un procédé de stratification par extrusion et sont faites en l'un quelconque parmi l'EVA (éthylène-acétate de vinyle), l'EMAA (éthylène-acide méthacrylique-acrylate) et une résine adhésive à base de polyoléfine contenant du polyéthylène.

14. Procédé selon la revendication 12, dans lequel la première couche de résine thermocollante (104) et la deuxième couche de résine thermocollante (108) sont faites en une résine terpolymère d'éthylène-acide méthacrylique-acrylate qui est capable d'adhérer au film de PET ou de PP sans mise en oeuvre d'un traitement d'apprêt chimique séparé.

15. Récipient scellé par un couvercle d'étanchéité selon l'une quelconque des revendications 1 à 11.
